# EUROPEAN PATENT SPECIFICATION

(11) **EP 1 407 944 B1**
(45) Date of publication and mention of the grant of the patent: **24.10.2012**
(21) Application number: 02745978.3
(22) Date of filing: 11.07.2002
(51) Int. Cl.: B60R 21/264

(54) **GAS GENERATOR FOR AIR BAG AND AIR BAG DEVICE**
GASGENERATOR FÜR AIRBAG UND AIRBAGVORRICHTUNG
GENERATEUR DE GAZ POUR AIRBAG ET DISPOSITIF D'AIRBAG

(30) Priority: 19.07.2001 JP 2001219916
(43) Date of publication of application: 14.04.2004
(73) Proprietor: Daicel Chemical Industries, Ltd., Kita-ku, Osaka-shi Osaka 530-0001 (JP)
(72) Inventor: OHJI, Nobuyuki, Takasago-shi, Hyogo 676-0805 (JP); NAKASHIMA, Yoshihiro, Himeji-shi, Hyogo 671-1153 (JP)
(74) Representative: Grünecker, Kinkeldey, Stockmair & Schwanhäusser
(86) International application number: PCT/JP2002/007067
(87) International publication number: WO 2003/008240

(56) References cited:
- WO-A-00/32446
- WO-A1-98/02336
- DE-A1- 19 520 847
- JP-A- 9 183 359
- JP-A- 10 182 275
- JP-A- 10 297 418
- JP-A- 11 091 495
- JP-A- 11 129 858
- JP-U- 3 040 049
- JP-U- 5 082 713
- US-A- 5 269 561

## Description

### Technical Field of the Invention

The present invention relates to a gas generator for an air bag which can make operation performance optimal, and an air bag apparatus using the same.

### The Background

A gas generator for an airbag comprising the features as defined in the preamble of claim 1 is known from WO 00/32446 A.

An air bag system which is mounted on various kinds of vehicles and the like including automobiles, aims to hold a passenger by means of an air bag (a bag body) rapidly inflated by gas when the vehicle collides at a high speed, so that the passenger is prevented from crashing into a hard portion inside the vehicle such as a steering wheel, a windshield due to an inertia and from getting injured. Generally, this kind of an air bag system comprises a gas generator actuated by a collision of the vehicle to discharge gas, and an air bag to introduce the gas therein to inflate.

The gas generator comprises, in a housing provided with a gas discharging port, an ignition means which receives an activating signal to be actuated and a gas generating means which is to be ignited and burnt by actuation of the ignition means for generating a combustion gas to inflate an air bag.

Since this air bag is inflated by an operating gas discharged from the gas generator, the generation behavior of the operating gas in the gas generator, namely the combustion behavior of a gas generating agent, affects the operation performance of the gas generator. And, as it is desirable that the operation performance of such a gas generator always achieves an given operation performance securely, it is desirable that the gas generating agent is also burnt in conformity with the given performance.

However, since the combustion of the gas generating agent depends on a chemical reaction, the combustion behavior (reaction rate) may be influenced by various external environments such as a temperature at the time of combustion of the gas generating agent. That is, combustion behavior of the gas generating agent at a temperature of about 40 °C may be different to some extent from that at a temperature of about 20 °C below 0 °C.

When the combustion behavior of the gas generating agent is affected by the external environment, the external environment at the time of combustion of the gas generating agent (i.e., at the time of actuation of the gas generator) acts as an uncertain factor. Therefore, unless any devise is implemented on the gas generator, the operation performance of the gas generator undergoes the influence of the external environment at the time of actuation thereof except that the gas generator reveals the same operation performance in all environments to be assumed. That is, it is difficult to equalize the pressure in the housing (hereinafter, referred to as "an internal combustion pressure") and to stabilize the combustion performance when the gas generating agent is burnt.

Also, there is conventionally suggested a gas generator which is actuated at two stages to apply as a small impact to a passenger as possible at the initial stage of the actuation and restrain the passenger sufficiently. Such gas generators are disclosed in JP-A 8-207696, US Patent No. 4,998,751, US Patent No. 4,950,458 and the like.

In such a gas generator, however, since the ratios of a surface area of the gas generating agent burnt at the respective stages and an area of the gas discharging port for controlling the combustion are not preferable in all cases, a proper control can not be made such that the internal pressure in the housing is too low in combustion at the first stage or it is too high in combustion at the second stage, and therefore, further improvement is required for achieving control securely.

### Disclosure of the Invention

Accordingly, the present invention provides a gas generator for an air bag which is not influenced by an external environment and that can exhibit its function securely.

Also, the present invention provides a gas generator for an air bag adjusting its operation performance at a plurality of stages, which can exhibit its function securely, suppresses the entire size of a container, and has a simple structure to be manufactured and a reduced weight.

The present invention further provides a gas generator for an air bag in which a pressure in a housing (hereinafter, referred to as "an internal combustion pressure") at the time of combustion of a gas generating agent is equalized without depending on an external environment to secure the stabilization of the combustion performance.

And the present invention provides an air bag apparatus using such a gas generator for an air bag.

A gas generator for an air bag of the present invention is a gas generator provided with at least two kinds of gas discharging ports which require different pressures to be opened, wherein the pressure in the gas generator (or in a housing) is made optimal by opening the respective kinds of gas discharging ports with the pressure in the gas generator (or in the housing), thereby optimizing the combustion performance of the gas generating agent, or the operation performance of the gas generator, and the respective kinds of gas discharging ports are opened according to an given design by restricting positions of the gas discharging ports. That is, among at least two kinds of gas discharging ports, one to be opened at the lowest pressure is opened first.

Namely, a gas generator for an air bag of the present invention includes the features of claim 1.

According to a preferred embodiment of the present invention as defined in claim 2, a plurality of ignition means are provided, and the kind of gas discharging ports to be opened at the lowest pressure is provided to be the gas discharging port nearest to an ignition means to be actuated at the earliest timing among a plurality of the ignition means. Also, the present invention according to claim 1 provides a gas generator for an air bag in which the gas discharging ports are arranged such that, among at least two kinds of gas discharging ports, the kind of gas discharging port to be opened at the lowest pressure is provided to be the gas discharging port nearest to a flame-transferring hole provided in a wall surface which separates the ignition means from the gas generating agent.

According to claim 3, said gas generator for an air bag can be provided that a plurality of ignition means are provided, and a partition wall is formed as a member for separating, among a plurality of the ignition means, the ignition means to be actuated at the earliest timing from the gas generating agent.

Further, as the gas generator of the present invention, a gas generator for an air bag according to claim 1 is provided, wherein among at least two kinds of gas discharging ports, the kind of gas discharging port to be opened at the lowest pressure is arranged to be the gas discharging port nearest to the center of the axial height of the housing.

Namely, in the gas generator, a plurality of the gas discharging ports are formed in the housing, and these gas discharging ports can be classified to at least two kinds on the basis of difference in pressure required for opening. In the present invention, among at least two kinds of gas discharging ports, the kind of gas discharging port to be opened at the lowest pressure is provided at least the above-described position, and the same kind of gas discharging ports can be arranged on the same circumference. In particular, when the gas generator housing is formed in a cylindrical shape, the same kind of gas discharging ports are arranged in the same circumferential direction of the gas generator housing, and the different kind of gas discharging ports can be arranged in the axial direction thereof.

Also, in at least two kinds of gas discharging ports classified according to the difference in pressure for opening may comprise a plurality of gas discharging ports in which one or some kinds of gas discharging ports have the same pressure to be opened, or comprise only one gas discharging port.

Among at least two kinds of gas discharging ports to be opened by different pressures, with respect to the kinds of gas discharging ports next to each other, a ratio of the pressures required for opening between them can be set to 1.1/1 or more, more preferably 4/1 to 1.1/1.

In order to make different pressures for opening the gas discharging ports, adjustment therefor can be performed, for example, by making at least one of the opening area of the gas discharging port and the rupturing pressure of the closing means different. That is, at least two kinds of gas discharging ports can be made different from each other in at least one of the opening area of the gas discharging port and the rupturing pressure of the closing means. In particular, an opening areas of the gas discharging ports are made different by forming all the gas discharging ports in the same shape such as a circle and making their inner diameters different. It is desirable to change an opening area of the gas discharging ports and a rupturing pressure of the closing means corresponding to an amount or a surface area of the gas generating agent.

When the pressure for opening a gas discharging port is adjusted by an opening area of the gas discharging port, with respect to the gas discharging ports being next to each other with respect to the opening surface thereof, among two or more kinds of gas discharging ports, it is preferable that a ratio between their opening areas is 97/3 to 3/97. When the gas discharging ports are formed circular, their opening areas can be adjusted by their inner diameters. For example, the inner diameters of the gas discharging ports are changed between 1 and 8 mm or between 1.2 and 4 mm. With respect to two kinds of gas discharging ports being next to each other with respect to the opening diameter, among two or more kinds of gas discharging ports, it is preferable that a ratio between a gas discharging ports with a larger diameter and a gas discharging port with a smaller diameter is 4/1 to 1.1/1. In this case, of course, the kind of gas discharging port with the largest opening area corresponds to the kind of gas discharging ports to be opened at the lowest pressure.

Also, when the pressure for opening a gas discharging port is adjusted by the rupturing pressure of the closing means, the rupturing pressure of the closing means can be adjusted by the material or the thickness of the closing means. In particular, when the thickness of the closing means is adjusted to two or more kinds, it is preferable that the ratio of the closing means being next to each other in thickness is 1.1/1 to 12/1. Naturally, in this case, the gas discharging port closed by the closing means with the smallest rupturing pressure is the one opened at the lowest pressure.

The pressure for opening the gas discharging port can be adjusted by setting the area ratio of at least two kinds of the discharging ports closed by at least two kinds of the closing means with different thicknesses to 97/3 to 3/97. Further, in the present invention, the adjustment can be performed by controlling the opening diameters and/or opening areas of the gas discharging ports to at least two kinds and adjusting the thicknesses of the closing means to at least two kinds. In this case, also, the pressure for opening the gas discharging port can be adjusted by setting the area ratio of at least two kinds of gas discharging ports closed by at least two kinds of the closing means with different thicknesses to between 97/3 and 3/97.

In general, as the closing member, a tape member formed by using various metals such as aluminum, stainless steel or the like. The tape member can be adhered as a seal tape from the inside of the housing, and various glues or adhesives can be used when the tape member is attached. It is preferable that this closing means comprises a seal layer having a thickness of 20 µm to 200 µm and an adhesive layer or cohesive layer having a thickness of 5 to 100 µₘ. In the present invention, the thickness of the seal tape indicates a thickness comprising a seal layer and an adhesive layer or a cohesive layer.

Such a closing means as a seal tape is not for adjusting the maximum internal pressure (hereinafter, referred to as "maximum internal combustion pressure") in the housing when the gas generating agent is burnt. That is, in the gas generator of the present invention, the maximum internal combustion pressure at the time of combustion of the gas generating agent is adjusted by an opening area of the gas discharging port. As a result, even after the seal tape is ruptured, the internal pressure of the housing can be adjusted according to the relationship between an opening area and combustion performance of the gas generating agent. Also, it is preferable that the closing means (particularly, in case of a seal tape) has a moisture-proof function for preventing moisture from entering the housing. In the present invention, however, when a moisture-proof means is applied to a constituent element which requires moisture-proof like the gas generating agent, the closing means may be satisfactory only to have their rupturing pressures adjusted at a plurality of stages. As such an additional moisture-proof means, for example, in case of the gas generating agent, there is a means such as wrapping the agent with a moisture-proof sheet.

The present invention can be realized in various gas generators which have conventionally provided, such as the so-called one cylinder type gas generator in which a combustion chamber is provided in a housing and a gas generating agent and an ignition means are arranged in the combustion chamber, the so-called two cylinders type gas generator in which an inner-cylindrical member is disposed in the housing, an ignition means accommodating chamber to store the ignition means is defined inside the inner-cylindrical member, and a combustion chamber to store the gas generating agent is defined outside the inner-cylindrical member, and the multi-stage type gas generator in which two combustion chambers accommodating the gas generating agent are provided in the housing. The gas generator can be one having a shape suitable for arrangement on a driver's side or one having a shape suitable for arrangement on a passenger's side.

In the gas generator of the present invention, by the above-described constitution, even if the actuation environment temperature of the gas generator is different, a change in internal pressure of the housing can be suppressed, and combustion of the gas generating agent can be stabilized.

Further, in the multi-stage type gas generator in which a plurality of combustion chambers are provided in a housing, and gas generating agents in the respective combustion chambers can be ignited/burnt simultaneously or independently with time lags by different ignition means, by providing at least two kinds of gas discharging ports having different pressures for opening, it is possible to equalize the pressure in the housing (hereinafter, referred to as "internal combustion pressure") at the time of combustion of the gas generating agents to stabilize the combustion performance.

In such a multi-stage type gas generator, for example, a gas discharging port having larger opening area and another gas discharging port having smaller opening area are opened, and the larger gas discharging port is ruptured at the initial stage of actuation of the multi-stage type gas generator, namely, by ignition of the gas generating agent in the first chamber, and the smaller gas discharging port is opened at the later stage, after the larger gas discharging port, namely, by ignition of the gas generating agent in the second chamber, or the smaller gas discharging port is opened simultaneously with opening of the larger gas discharging port when two igniters are ignited simultaneously and the gas generating agents in both the chambers are burnt. The present invention aims to cover a difference in a charge amount of the gas generating agent in the respective combustion chambers.

### <Operation>

In the gas generator of the above-described invention, the gas discharging ports are adjusted so that the gas discharging port having larger opening area is opened unfailingly at the internal pressure of 100 kg/cm² and a gas discharging port having smaller opening area is opened at the internal pressure of 150 kg/cm². Therefore, when two combustion chambers are provided in a housing, a first gas generating agent and a second gas generating agent are separated and accommodated in the respective combustion chambers, and an operating gas generated in the two or more combustion chambers is discharged from a common gas discharging port, either of the gas generating agent can always be burnt under an ideal combustion behaviors (for example, internal combustion pressure and the like).

That is, when all the gas discharging ports are opened from the beginning, a proper combustion environment can be obtained when the first and second gas generating agents are simultaneously burnt. However, when the second gas generating agent is burnt with a delay of about 30 milliseconds or so, the combustion gas of the first gas generating agent is discharged in the meantime, the internal combustion pressure when the second gas generating agent is burnt becomes slightly lower, so that the optimal combustion environment for burning of the second gas generating agent can not be achieved. If the opening areas of the gas discharging ports are reduced to cover the above defect, the pressure at combustion becomes high in case of burning the second gas generating agent with a delay of 10 milliseconds or 20 milliseconds, or in case of burning the first and second gas generating agents simultaneously. Accordingly, when one kind of gas discharging ports are opened simultaneously from the beginning, it becomes difficult to cover all the combustion modes.

As a result, the internal combustion pressure at the time of combustion of the first gas generating agent is low, having a large difference with the internal combustion pressure at the time of combustion of the second gas generating agent. In view of the above, in this gas generator, by opening a plurality of gas discharging ports at different timings corresponding to combustion of each gas generating agent such as a gas discharging port opened at the time of combustion of the first gas generating agent and another gas discharging port opened at the time of combustion of the second gas generating agent, each gas generating agent can always be burnt under the ideal combustion behavior (internal combustion pressure).

Also, even in case of only one combustion chamber provided in the housing, only a gas discharging port having larger opening area is opened when an external environment temperature at the time of actuation of the gas generator is low, and besides the gas discharging port whose opening area is large, and a gas discharging port having smaller opening area is opened as well as a gas discharging port having larger opening area, when an external environment temperature at the time of actuation of the gas generator is at room temperature or high, so that a more stable internal combustion pressure can be obtained.

And, in the present invention, in order to unfailingly actuate such a gas generator, positions of the gas discharging ports are adjusted such that the kind of gas discharging port to be opened at the lowest pressure is arranged to be the gas discharging port nearest to an ignition means, or nearest to a flame-transferring hole provided in a partition wall which defines a space accommodating the ignition means and a space accommodating the gas generating agent, or nearest to the center position of the axial height of the housing. Then, it is preferable that the first generated operating gas, of the operating gases generated in two combustion chambers, reaches a gas discharging port opened at the lowest pressure among at least two kinds of gas discharging ports.

That is, when a gas generating agent existing at a corner of the combustion chamber is ignited and burnt by the first actuated ignition means, an operating gas generated thereby moves from the corner of the combustion chamber towards the gas discharging port. In such a case, if there is any unexpected inconvenience such that a seal tape closing the gas discharging port is not attached securely and so on, a gas discharging port which should not be opened first may be opened first. Therefore, in the present invention, a position of a gas discharging port which is supposed to be opened first, that is, a gas discharging port opened at the lowest pressure is adjusted to securely obtain an given actuation.

The above-described gas generator for an air bag is accommodated in a module case together with an air bag (a bag body) which introduces a gas generated in the gas generator to inflate, thereby constituting an air bag apparatus. In this air bag apparatus, the gas generator is actuated, interlocking with an impact sensor detecting the impact, and a combustion gas is discharged from the gas discharging port of the housing. The combustion gas flows in the air bag, so that the air bag breaks a module cover to inflate, thereby forming a cushion for absorbing an impact between a hard structure in a vehicle and a passenger.

According to the present invention, since the operation is performed without being influenced by external environment such as an external temperature at a time of activation of a gas generator, and two or more kinds of gas discharging ports are opened in accordance with the given order, there is realized a gas generator which securely achieves an given operation performance.

Also, in a gas generator whose operation performance is adjusted in a plurality of stages, there is realized a gas generator for an air bag which exhibits its function securely while suppressing the entire size of a container, and achieving a simple structure and a manufacturing easiness as well as weight reduction

Further, a gas generator for an air bag which equalizes an internal pressure in a housing (hereinafter, referred to as "an internal combustion pressure") when a gas generating agent is burnt without depending on an external environment to secure stabilization of a combustion performance can be obtained.

### Brief Description of the Drawings

Fig. 1 is a vertical sectional view showing one embodiment of a gas generator of the present invention.
Fig. 2 is a vertical sectional view showing another embodiment of the gas generator of the present invention.
Fig. 3 is a configuration diagram of an air bag apparatus of the present invention.

### Explanation of Reference Numeral

- 3: housing
- 5a: first combustion chamber
- 5b: second combustion chamber
- 7: partition member
- 9a: first gas generating agent
- 9b: second gas generating agent
- 12a: first igniter
- 12b: second igniter
- 13: initiator collar
- 22: coolant/filter
- 26a: first gas discharging port
- 26b: second gas discharging port
- 27: seal tape
- 27a: first seal tape
- 27b: second seal tape

### Preferred Embodiment of the Invention

A gas generator for an air bag according to the present invention will be described below with reference to the accompanying drawings.

### Embodiment 1

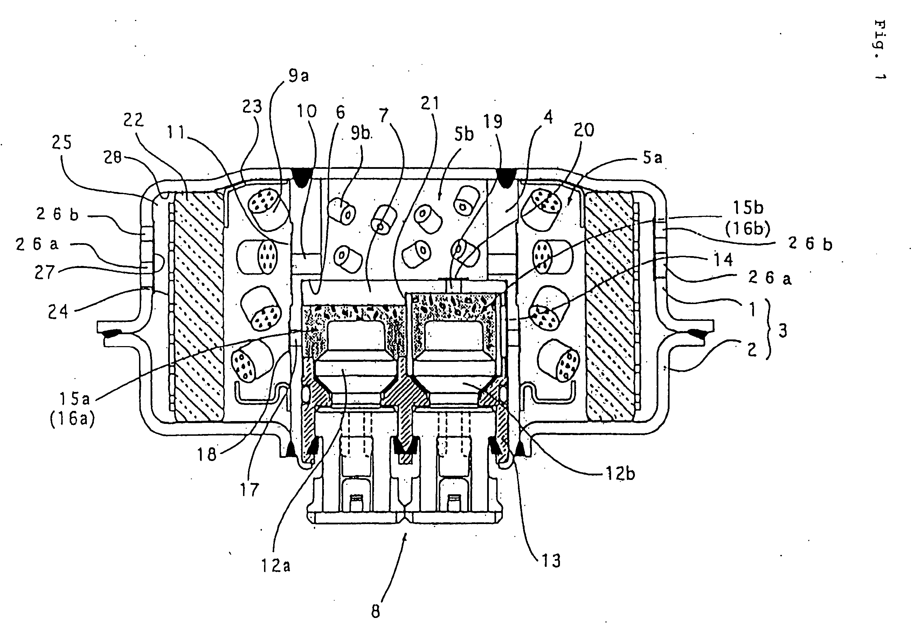

Fig. 1 is a vertical cross sectional view of a gas generator according to a first embodiment of the present invention. Fig. 1 shows a structure particularly suitable for a driver's side gas generator.

The gas generator comprises a housing 3 formed by joining a diffuser shell 1 provided with gas discharging ports and a closure shell 2 to form an inner accommodating space. The gas generator is provided with an inner cylindrical member 4 formed in a substantially cylindrical shape and arranged in the housing 3, thereby forming a first combustion chamber 5a outside the inner cylindrical member 4. Further, a stepped notch portion is provided on an inside surface of the inner cylindrical member 4, and a partitioning member 7, formed in a substantially flat circular shape, is arranged in the stepped notch portion 6. The partitioning member 7 further partitions an inner portion of the inner cylinder into two chambers to form a second combustion chamber 5b in the diffuser shell 1 side and an ignition means accommodating chamber 8 in the closure shell 2 side, respectively. As a result, in this gas generator, the first combustion chamber 5a and the second combustion chamber 5b are concentrically provided in the housing 3 and arranged adjacent to each other in the radial direction of the housing. Gas generating agents (9a and 9b), burnt by ignition means activated upon an impact for generating combustion gas, are stored in the first and second combustion chambers. The ignition means activated upon an impact is stored in the ignition means accommodating chamber 8.

A through hole 10 is provided in the inner cylindrical member 4 which defines the first combustion chamber 5a and the second combustion chamber 5b and that serves as a partition wall separates the first combustion chamber 5 from the ignition means accommodating chamber 8. And the through hole 10 is closed by a seal tape 11 which is ruptured due to combustion of the gas generating agent. This seal tape 11 needs to be adjusted on its material and a thickness so that the seal tape 11 is ruptured only when the gas generating agent 9b in the second combustion chamber 5b is burnt. In the present embodiment, a stainless seal tape having a thickness of 40 µm is used. Further, the through hole 10 does not function to control an internal pressure in the combustion chamber 5b.

The ignition means comprises two electric ignition type igniters (12a and 12b) activated by an activating signal outputted on a basis of detection by a sensor, and the igniters 12a and 12b are provided parallel to each other in a single initiator collar 13 while exposing head portions thereof. The initiator collar provided with two igniter (12a and 12b) is fixed easily and securely by crimping an lower end of the inner cylindrical member 4.

A substantially cylindrical separating cylinder 14 is arranged in a space between the initiator collar 13 and the partitioning member 7 to surround one igniter 12b (hereinafter, referred to as "a second igniter"), a first transfer charge accommodating chamber 15a is defined outside the separating cylinder 14 and a second transfer charge accommodating chamber 15b is defined inside, respectively, and the igniter and the transfer charge constituting the ignition means together with the igniters are stored in the respective chambers. Accordingly, transfer charges (16a and 16b) are securely divided from each other at the respective igniters (12a and 12b). Incidentally, the second transfer charge 16a of these transfer charges can be omitted.

Further, a common coolant/filter 22 for purifying and cooling the combustion gas generated by the combustion of the gas generating agents (9a and 9b) is disposed in the housing 3. An inner peripheral surface of the coolant/filter 22 at the diffuser shell 1 side is covered with a short pass preventing member 23 so that the combustion gas does not pass between an end surface of the coolant/filter 22 and a ceiling portion inner surface 28 of the diffuser shell 1. An outer layer 24 for preventing the filter 22 from expanding outwardly due to passing of the combustion gas or the like is arranged on the outer side the coolant/filter 22. The outer layer 24 is, for example, formed by using a layered wire mesh body, and in addition, may be formed by using a porous cylindrical member having a plurality of through holes on a peripheral wall surface, or a belt-like suppressing layer obtained by forming a belt-like member with a predetermined width into an annular shape. A gap 25 is further formed on the outer side of the outer layer 24 so that the combustion gas can pass through the entire portion of the filter 22.

And, the gas generator of the present invention is characterized in the function and the arrangement of gas discharging ports formed in the diffuser shell 1.

Two kinds of gas discharging ports 26a and 26b having different diameters are provided in a peripheral wall portion of the diffuser shell 1 in the gas generator shown in Fig. 1. The present embodiment shows such a structure that the diameter of the first gas discharging ports 26a is φ3.0 mm and the number of the ports is ten, and the diameter of the second discharging ports 26b is φ2 mm and the number of the ports is ten. The opening having the diameter of 3 mm occupies the area of 0.071 cm² and the opening having the diameter 2 mm occupies an area of 0.031 cm². When there are ten ports respectively, the total opening area is 1.02 cm². The opening diameter ratio of openings next to each other with respect to the diameters is 1.5. The opening area ratio thereof is 2.29/1.

And, these gas discharging ports 26a and 26b are closed by a seal tape 27 provided to moisture-proof the gas generating agent. In the present embodiment, as the seal tape 27, the one in which the thickness of an aluminum seal layer is 50 µm and the thickness of an adhesive layer or a cohesive layer is 50 µm is used. It is desirable that the seal tape 27 is wide enough to have a surplus even when closing closes both two kinds of gas discharging ports aligned in the axial direction of the gas generator at one time, such that there is a margin of 2 to 3 mm from the upper or lower end of each discharging port 26a, 26b to the upper or lower end of the seal tape. Accordingly, the first and second gas discharging ports are closed by a seal tape having the same rupturing pressure. Then, since the diameter of the first gas discharging port 26a is φ3.0 mm and the diameter of the second gas discharging port 26b is φ2.0 mm, the first gas discharging port 26a is formed as the gas discharging port to be opened with lower pressure.

In the respective gas discharging ports 26a and 26b, the gas discharging ports of the same kind (26a, 26a, ...) are arranged in the circumferential direction of the housing, and the gas discharging ports of different kinds (26a, 26b) are arranged in the axial direction of the housing. Incidentally, in order to obtain the effect of the present invention, respective discharging ports are arranged to be staggered in the circumferential direction of the housing.

However, in order to obtain the effect of the present invention, it is necessary to adjust positions of the first gas discharging ports 26a to be opened at the lowest pressure. That is, when the first gas generating agent is burnt first to generate an operating gas, it is required that, as shown in the present embodiment, the first gas discharging port 26a is formed at a position nearest to the ignition means, preferably at a position nearest to the ignition means actuated at the earliest timing (namely, the ignition means of the first igniter), or at a position nearest to a flame-transferring hole (namely, the first flame-transferring hole 17) provided in the partition wall (namely, the inner-cylindrical member 4) which defining a space accommodating the ignition means (the ignition means accommodating chamber 8) and a space accommodating the gas generating agent (the combustion chamber 5a), or at a position nearest to the center of the axial height of the housing 3.

In this case, the first gas discharging port 26a can also be formed at a position where an operating gas generated by combustion of the first gas generating agent 9a reaches first, or at a position nearest to a portion of the first gas generating agent 9a which is ignited first (namely, the gas generating agent in the vicinity of the first flame-transferring hole 17).

By arranging the first gas discharging port 26a in this manner, the following operation/effect can be obtained.

That is, in the gas generator shown in Fig. 1, the first flame-transferring hole 17 for transferring a flame from the first igniter to the first combustion chamber is formed in a lower portion of the inner-cylindrical member in the drawing. For this reason, the flame of the first transfer charge burns the gas generating agent 9a in the first combustion chamber 5a from the lower portion. As a result, an operating gas generated by combustion of the first gas generating agent 9a advances from the first flame-transferring hole 17 towards the gas discharging port, and the operating gas advances to the seal tape 27 closing the gas discharging port from the lower portion. At this time, if the seal tape is not adhered sufficiently, the seal tape closing the gas discharging port, which should not be opened first, ruptures or peels off, so that the internal pressure in the housing can not be controlled accurately.

In view of the above, according to a kind of gas discharging ports, a position thereof is restricted so that a gas discharging port which is intended to be opened first, i.e., a gas discharging port to be opened at the lowest pressure, is provided at a position nearest to the ignition means, at a position nearest to the flame-transferring hole (i.e., the first flame-transferring hole 17) provided in the partition wall (namely, the inner-cylindrical member 4) for defining the space in which the ignition means is arranged and the space in which the gas generating agent is disposed (the combustion chamber 5a), or at a position nearest to the center in the axial height of the housing 3.

In this structure, when the gas generator is actuated, for example, when the igniter for igniting a single-perforated gas generating agent in the combustion chamber 5b is actuated at about 30 seconds after the igniter for igniting the gas generating agent with seven holes in the combustion chamber 5a is actuated, the opening area (the diameter of the port and the number of the ports) of the gas discharging ports 26a can be correlated with the combustion surface area of the gas generating agent in the combustion chamber 5a, and the opening area (the diameter of the port and the number of the ports) of the gas discharging ports 26b can be correlated with the combustion surface area of the gas generating agent in the combustion chamber 5b.

In the gas generator of the present invention, as shown in the present embodiment, two kinds of gas discharging ports having different opening areas are provided, and the surface areas of the gas generating agents in the respective combustion chambers are correlated with the discharging ports, so that an optimal development of an air bag can be obtained regardless of ignition timings of the respective gas generating agents. Here, the opening areas of the gas discharging ports are set to two kinds. However, by further increasing the number of the kinds and adjusting the rupturing pressure of the seal tape at multistage, it is possible to suppress a difference in the output performance due to the environment temperature.

The above described effect of the present invention can be also confirmed, for example, according to a tank combustion test mentioned below. In the other words, by examining the change of the housing internal pressure in time and the change of the tank internal pressure in time, the operation performance of the gas generator and the opening aspect of the gas discharging ports can be determined.

### <Tank combustion test>

A gas generator for the air bag is placed in a SUS (stainless steel) tank having an inner volume of 60 liter and is connected to an electric ignition circuit, provided outside the tank, after sealing the tank at a room temperature. By setting the time to zero when an ignition electric circuit switch is turned on (an ignition electric current is applied), the pressure increase inside the tank is measured by a pressure transducer, independently placed in the tank, for a time period between 0 and 200 milliseconds. Based on the measured data, a tank pressure/time curve is generated by a computer, and a curve estimating the performance of the gas generator (hereinafter, refer to as "a tank curve") is obtained. After finishing the combustion, the gas in the tank is partly taken out and may be used for the analysis of gasses such as CO, NOx, etc.

In the gas generator constituted in the above manner, when the first igniter 12a, disposed in the ignition means accommodating chamber 8 and in the outer side of the separating cylinder 14, is activated, the transfer charge 16a, stored in the first transfer charge accommodating chamber 15a, is ignited and burnt, and the flame thereof passes through the first flame-transferring hole 17 in the inner cylindrical member 4 and burns the porous cylindrical first gas generating agent 9a stored in the first combustion chamber 5a. When the second igniter 12b, surrounded by the separating cylinder 14, is activated, the transfer charge 16b, stored in the second transfer charge accommodating chamber 15b, is ignited and burnt, and the flame thereof ignites and burns the single perforated cylindrical second gas generating agent 9b stored in the second combustion chamber 5b. As a result, an output performance (an actuation performance) of the gas generator can be optionally adjusted by activating the second igniter after the activation of the first igniter or simultaneously activating the first igniter and the second igniter. Therefore, under various circumstances, such as a speed of a vehicle and an environmental temperature at a time of collision, it is possible to make an inflation of the air bag in the air bag apparatus mentioned below most suitable. Particularly, in the gas generator shown in this drawing, the respective combustion chambers (5a and 5b) are provided with gas generating agents (9a and 9b) having different shapes. Namely, the porous cylindrical first gas generating agent 9a is disposed in the first combustion chamber 5a, and the single-perforated cylindrical second gas generating agent 9b is disposed in the second combustion chamber 5b. Further, the amount of the gas generating agent stored in each combustion chamber (5a, 5b) is different. The gas generating agents 9a is 35 g and the amount of the gas generating agent 9b is 6 g. Consequently, in this gas generator, the output performance can be adjusted more precisely. Naturally, the shape, composition, composition ratio, amount, etc. of the gas generating agent may be changed to obtain the desired output performance.

According to the present invention, the internal pressure at the time of actuation of a gas generator can be equalized, and the combustion performance thereof can be stabilized by combining at least two igniters and at least two kinds of gas discharging ports in this manner.

### Embodiment 2

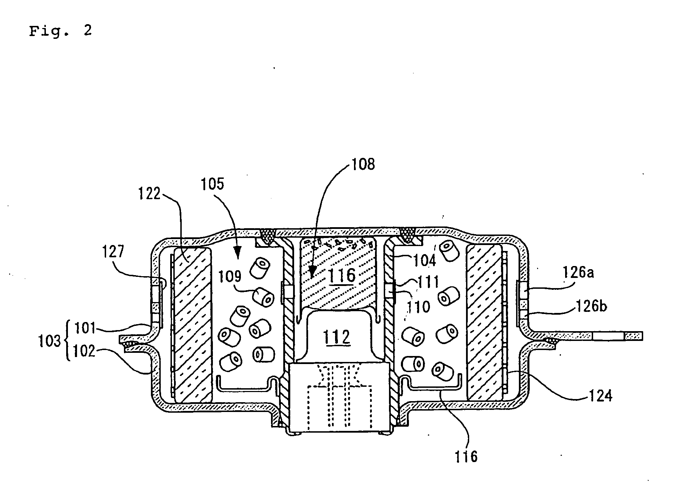

Fig. 2 is a vertical sectional view of a gas generator for an air bag showing a second embodiment, which has a structure particularly suitable for being arranged on a driver's side. The gas generator shown in this drawing is provided in the housing with one combustion chamber, which is different from the gas generator of the embodiment 1.

That is, in the gas generator shown in this figure, an inner cylindrical member 104 is disposed in a housing which is formed by joining diffuser shell 101 and a closure shell 102, and an inner-cylindrical member 104, thereby defining an ignition means accommodating chamber 108 in the inside of the inner-cylindrical member 104 and a combustion chamber 105 outside thereof. An ignition means is disposed in the ignition means accommodating chamber 108, and the ignition means comprises an igniter which receives an activating signal to be actuated and a transfer charge 116 which is ignited and burnt by the actuation of the igniter. Meanwhile, a gas generating agent 109 which is ignited and burnt by the actuation of the ignition means is charged in the combustion chamber 105 and supported by an under plate 116. The inner-cylindrical member 104 is fixed by joining its one end portion formed in an outward flange shape to an inner surface of the diffuser shell 101, and the other end thereof fixes the igniter 112 by crimping.

A coolant/filter 122 for cooling and purifying a combustion gas generated by the combustion of the gas generating agent 109 is disposed radially outside the combustion chamber 105, and its outer peripheral surface is supported by a porous cylindrical outer layer 124.

A flame-transferring holes 110 is formed in the peripheral surface of the inner-cylindrical member 104, and the flame-transferring hole is closed by a seal tape 111 which is ruptured by combustion of the transfer charge 116. Since a flame of the transfer charge 116 disposed in the axial direction of the igniter 112 is discharged from the flame-transferring hole 110, the flame-transferring hole 110 is formed in the range where the transfer charge 116 is disposed.

Two kinds of gas discharging ports (126a and 126b) which are opened by pressures inside the housing are formed in the housing 103. The gas discharging ports (126a and 126b) of the respective kinds require different pressures for opening. The gas discharging port is opened by rupturing or peeling off a closing means closing the gas discharging port, i.e. a seal tape 127.

In the present embodiment, since these two kinds of gas discharging ports (126a and 126b) are closed by the seal tapes 127 with the same rupturing pressure, the pressure for opening the gas discharging port is determined depending on the opening area. In the present embodiment, the opening area of the first gas discharging port 126a is formed to be larger than that of the second gas discharging port 126b. Accordingly, in this gas generator, such a design is employed that the first gas discharging port 126a is opened at a lower pressure than that in the second gas discharging port 126b and the first gas discharging port 126a is opened earlier than the second gas discharging port 126b.

And, the first gas discharging port 126a to be opened at the lower pressure is formed at a position nearest to the ignition means, preferably, it is formed at a position nearest to the ignition means (namely, the ignition means relating to the first igniter) actuated at the earliest timing, or it is formed at a position nearest to the flame-transferring hole (namely, the flame-transferring hole 110) provided in a partition wall (namely, the inner-cylindrical member 104) for defining a space in which the ignition means is disposed and a space in which the gas generating agent is disposed (the combustion chamber 5a), or at a position nearest to the center position of the axial height of the housing 103.

Incidentally, the first gas discharging port 126a may be formed at a position where an operating gas generated by combustion of the gas generating agent 109 reaches first, or at a position nearest to a portion of the gas generating agent 109 which is ignited first (namely, the gas generating agent in the vicinity of the flame-transferring hole 110).

Thereby, the first gas discharging port is opened first as designed originally after the gas generator starts actuation.

### Embodiment 3

In the above-described Embodiments 1 and 2, the aspect in which the pressure for opening the gas discharging port is adjusted by the opening area of the gas discharging port is described.

In the present embodiment, the pressure for opening the gas discharging port is also adjusted by the rupturing pressure of the closing means for the gas discharging port, for example, the seal tape.

For example, such a constitution can be employed that the opening areas of the gas discharging ports are made equal and the gas discharging port to be opened at the lowest pressure is closed by a seal tape with the lowest rupturing pressure. If the rupturing pressure of the seal tape which closes the gas discharging port is adjusted by its thickness, the rupturing pressure can be lowered by using a thinner seal tape.

Accordingly, in the gas generator in this aspect, the gas discharging port which is closed by a seal tape having lower rupturing pressure, such as a seal tape formed thinner can be arranged as the first gas discharging port (26a) in Fig. 1 or the first gas discharging port (126a) in Fig. 2.

### Embodiment 4

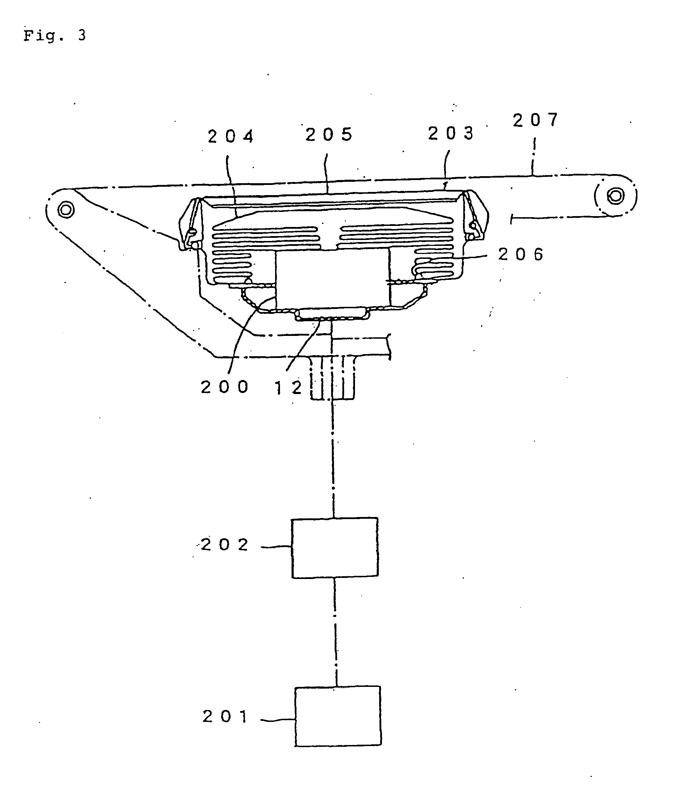

Fig. 3 shows one embodiment of an air bag apparatus constituted to include the gas generator.

The air bag apparatus comprises a gas generator 200, an impact sensor 201, a control unit 202, a module case 203, and an air bag 204. In the gas generator 200, the gas generator, described with reference to Fig. 1, is used and the actuation performance thereof is adjusted to apply small an impact as possible to the occupant at the initial stage of the actuation of the gas generator.

The impact sensor 201 comprises, for example, a semiconductor type acceleration sensor. This semiconductor type acceleration sensor is structured such that four semiconductor strain gauges are formed on a silicone base plate to be bent when the acceleration is applied, and these semiconductor strain gauges are bridge-connected. When the acceleration is applied, the beam defects and a strain is produced on the surface. Due to the strain, a resistance of the semiconductor strain gauge is changed, and the structure is made such that the resistance change can be detected as a voltage signal in proportion to the acceleration.

The control unit 202 is provided with an ignition decision circuit, and the structure is made such that the signals from the semiconductor type acceleration sensor is inputted to the ignition decision circuit. The control unit 202 starts calculation at a time when the impact signal from the sensor 201 exceeds a certain value, and when the calculated result exceeds a certain value, it outputs an activating signal to the igniter 12 of the gas generator 200.

The module case 203 is formed, for example, of a polyurethane, and includes a module cover 205. The air bag 204 and the gas generator 200 are stored in the module case 203 so as to be constituted as a pad module. This pad module is generally mounted on a steering wheel 207 when being mounted on a driver side of an automobile.

The air bag 204 is formed of a nylon (for example, a nylon 66), a polyester or the like, and structured such that a bag port 206 thereof surrounds the gas discharge port of the gas generator and is fixed to a flange portion of the gas generator in a folded state.

When the semiconductor type acceleration sensor 201 detects an impact at a time of a collision of an automobile, the signal is transmitted to the control unit 202, and the control unit 202 starts calculation at a time when the impact signal from the sensor exceeds a certain value. When the calculated result exceeds a certain value, it outputs the activating signal to the igniter 12 of -the gas generator 200. Accordingly, the igniter 12 is activated to ignite the gas generating agent, and the gas generating agent burns and generates the gas. The gas is discharged into the air bag 204, whereby the air bag breaks the module cover 205 to inflate, thereby forming a cushion absorbing an impact between the steering wheel 207 and the occupant.

## Claims

1. A gas generator for an air bag comprising, in a housing (3; 103) having a plurality of gas discharging ports (26a, 26b; 126a, 126b),
an ignition means (12a, 12b; 112) to be actuated upon receiving an activating signal, a gas generating agent (9a, 9b, 109) to be ignited and burnt due to actuation of the ignition means (12a, 12b, 112) for generating an operating gas, and
the gas discharging ports (26a, 26b; 126a, 126b) closed by a closing means (27; 127) which is ruptured due to the internal pressure of the housing (3; 103) to open the gas discharging ports (26a, 26b; 126a, 126b), wherein
at least two kinds of gas discharging ports (26a, 26b, 126a, 126b) to be opened at different pressures are formed in the housing (3; 103),
among at least two kinds of gas discharging ports (26a, 26b; 126a, 126b), the kind of gas discharging ports (26a; 126a) to be opened at the lowest pressure is arranged to be either the gas discharging port (26a; 126a) nearest to the ignition means (12a, 12b; 112), the gas discharging port (26a; 126a) nearest to a flame-transferring hole (17; 110) provided in a partition wall (4; 104) which defines a space (8; 108) accommodating the ignition means (12a, 12b; 112) and a space (5a; 105) accommodating a gas generating agent, or the gas discharging port (26a; 126a) nearest to the center of the axial height of the housing (3; 103);
a plurality of gas discharging ports (26a, 26b; 126a, 126b) of the same kind are arranged in circumferential direction of the housing (3; 103), and
the gas discharging ports (26a, 26b; 126a, 126b) of different kinds are arranged in axial direction of the housing (3; 103);
**characterized in that**
the gas discharging ports (26a, 26b, 126a, 126b) of different kinds are arranged staggered to each other in the circumferential direction of the housing (3; 103).

2. The gas generator for an air bag according to claim 1, wherein a plurality of the ignition means (12a, 12b) are provided, and the kind of gas discharging ports (26a) to be opened at the lowest pressure is the gas discharging port (26a) nearest to the ignition means to be actuated at the earliest timing among a plurality of the ignition means (12a, 12b).

3. The gas generator for an air bag according to claim 1, wherein the kind of gas discharging ports (26a; 126a) to be opened at the lowest pressure is the gas discharging port (26a; 126a) nearest to the flame-transferring hole (17; 110) provided in the partition wall (4; 104) which defines the space (8; 108) accommodating the ignition means (12a, 12b; 112) and the space (5a; 105) accommodating a gas generating agent, and wherein a plurality of the ignition means (12a, 12b) are provided, and the partition wall (4) separates, among a plurality of the ignition means (12a, 12b), the ignition means to be actuated at the earliest timing from the gas generating agent (9a).

4. The gas generator for an air bag according to any one of claims 1 to 3, wherein at least two kinds of gas discharging ports (26a, 26b; 126a, 126b) are different from each other in at least one of the opening area of the gas discharging port (26a, 26b; 126a, 126b) and the rupturing pressure of the closing means (27; 127).

5. The gas generator for an air bag according to any one of claims 1 to 4, wherein at least two kinds of gas discharging ports (26a, 26b; 126a, 126b) are arranged to be aligned on the same circumference for each kind.

6. The gas generator for an air bag according to any one of claims 1 to 5, wherein the gas generating agent (9a, 9b; 109) is charged in the combustion chamber (5a, 5b; 105) provided in the housing (3; 103), the ignition means (12a, 12b; 112) is an electric ignition type igniter, and the igniter is disposed in the combustion chamber (5b).

7. The gas generator for an air bag according to any one of claims 1 to 6, wherein an inner cylindrical member (104) is arranged in the housing (103), an ignition means accommodating chamber (108) storing the ignition means (112) is defined inside the inner cylindrical member (104), and the combustion chamber (105) charged with the gas generating agent (109) is defined radially outside the inner cylindrical member (104).

8. The gas generator for an air bag according to any one of claims 1 to 7, wherein at least two combustion chambers (5a, 5b) charged with the gas generating agent (9a, 9b) are provided in the housing (3), and the combustion chambers (5a, 5b) are separated from each other.

9. The gas generator for an air bag according to claim 8, wherein operating gases generated in at least two combustion chambers (5a, 5b) are discharged from a common gas discharging port (26a, 26b).

10. The gas generator for an air bag according to claim 8 or 9, wherein, of operating gases generated in the two combustion chambers (5a, 5b), the operating gas generated first reaches the kind of the gas discharging port (26a) to be opened at the lowest pressure among at least two gas discharging ports (26a, 26b).

11. An air bag apparatus comprising:
a gas generator (200) for an air bag;
an impact sensor (201) detecting the impact to actuate the gas generator (200);
an air bag (204) introducing a gas generated (200) in the gas generator to inflate; and
a module case (203) accommodating the air bag (204), wherein the gas generator (200) for an air bag is the gas generator for an air bag according to any one of claims 1 to 10.

## Patentansprüche

1. Gaserzeuger für einen Airbag, in einem Gehäuse (3; 103) umfassend eine Vielzahl von Gasaustrittsöffnungen (26a, 26b; 126a, 126b),
ein Zündmittel (12a, 12b; 112), welches nach Empfang eines aktivierenden Signals zu betätigen ist, ein Gaserzeugungsmittel (9a, 9b, 109), welches durch die Betätigung des Zündmittels (12a, 12b, 112) zum Erzeugen eines Betriebsgases zu entzünden und zu verbrennen ist, und
die Gasaustrittsöffnungen (26a, 26b; 126a, 126b), die durch ein Verschlussmittel (27, 103) geschlossen sind, welches durch den Innendruck des Gehäuses (3; 103) zum Öffnen der Gasaustrittsöffnungen (26a, 26b; 126a, 126b) aufgerissen ist, wobei in dem Gehäuse (3, 103) mindestens zwei Arten von Gasaustrittsöffnungen (26a, 26b, 126a, 126b) gebildet sind, die bei unterschiedlichen Drücken zu öffnen sind, wobei die Art der bei dem niedrigsten Druck zu öffnenden Gasaustrittsöffnungen (26a; 126a) von den mindestens zwei Arten von Gasaustrittsöffnungen (26a, 26b; 126a, 126b) entweder die Gasaustrittsöffnung (26a; 126a) nächstliegend zu dem Zündmittel (12a, 12b, 112), oder die Gasaustrittsöffnung (26a; 126a) nächstliegend zu einer Flammenübertragungsbohrung (17; 110) ist, welche in einer Trennwand (4; 104) vorgesehen ist, die einen das Zündmittel (12a, 12b; 112) aufnehmenden Raum und einen ein Gaserzeugungsmittel aufnehmenden Raum (5a, 105) definiert, oder die Gasaustrittsöffnung (26a; 126a) nächstliegend zu der Mitte der axialen Höhe des Gehäuses (3, 103);
wobei eine Vielzahl von gleichartigen Gasaustrittsöffnungen (26a, 26b; 126a, 126b) in Umfangsrichtung des Gehäuses (3; 103) angeordnet ist, und die verschiedenartigen Gasaustrittsöffnungen (26a, 26b; 126a, 126b) in axialer Richtung des Gehäuses (3; 103) angeordnet sind,
**dadurch gekennzeichnet, dass**
die verschiedenartigen Gasaustrittsöffnungen (26a, 26b, 126a, 126b) in Umfangsrichtung des Gehäuses (3, 103) zueinander versetzt angeordnet sind.

2. Gaserzeuger für einen Airbag nach Anspruch 1, wobei eine Vielzahl der Zündmittel (12a, 12b) vorgesehen ist, und die Art der bei dem niedrigsten Druck zu öffnenden Gasaustrittsöffnungen (26a) die Gasaustrittsöffnung (26a) nächstliegend zu dem Zündmittel ist, welches zu dem frühesten Zeitpunkt unter einer Vielzahl der Zündmittel (12a, 12b) zu betätigen ist.

3. Gaserzeuger für einen Airbag nach Anspruch 1, wobei die Art der bei dem niedrigsten Druck zu öffnenden Gasaustrittsöffnungen (26a; 126a) die Gasaustrittsöffnung (26a; 126a) nächstliegend zu der Flammenübertragungsbohrung (17; 110) ist, welche in der Trennwand (4; 104) vorgesehen ist, die den das Zündmittel (12a, 12b; 112) aufnehmenden Raum (8; 108) und den ein Gaserzeugungsmittel aufnehmenden Raum (5a; 105) definiert, und wobei ein Vielzahl der Zündmittel (12a, 12b) vorgesehen sind, und wobei die Trennwand (4) unter einer Vielzahl von der Zündmittel (12a, 12b) das Zündmittel trennt, welches zu dem frühesten Zeitpunkt durch das Gaserzeugungsmittel zu betätigen ist (9a).

4. Gaserzeuger für einen Airbag nach einem der Ansprüche 1 bis 3, wobei mindestens zwei Arten von Gasaustrittsöffnungen (26a, 26b; 126a, 126b) sich von einander in wenigstens einer der Öffnungsbereiche der Gasaustrittsöffnung (26a, 26b; 126a, 126b) und dem aufreißenden Druck des Verschlussmittels (27; 127) unterscheiden.

5. Gaserzeuger für einen Airbag nach einem der Ansprüche 1 bis 4, wobei mindestens zwei Arten von Gasaustrittsöffnungen (26a, 26b; 126a, 126b) zur Ausrichtung auf dem gleichen Umfang für jede Art angeordnet sind.

6. Gaserzeuger für einen Airbag nach einem der Ansprüche 1 bis 5, wobei das Gaserzeugungsmittel (9a, 9b; 109) in die Brennkammer (5a, 5b; 105) gefüllt ist, die in dem Gehäuse (3; 103) vorgesehen ist, wobei das Zündmittel (12a, 12b; 112) ein Zünder für elektrische Zündung ist, und wobei der Zünder in der Brennkammer (5b) angeordnet ist.

7. Gaserzeuger für einen Airbag nach einem der Ansprüche 1 bis 6, wobei ein inneres zylindrisches Element (104) in dem Gehäuse (103) angeordnet ist, wobei eine Zündmittel aufnehmende Kammer (108) zur Speicherung des Zündmittels (112) innerhalb des inneren zylindrischen Elements (104) definiert ist, und wobei die Brennkammer (105), welche mit dem Gaserzeugungsmittel (109) gefüllt ist, radial außerhalb des inneren zylindrischen Elements (104) definiert ist.

8. Gaserzeuger für einen Airbag nach einem der Ansprüche 1 bis 7, wobei mindestens zwei Brennkammern (5a, 5b), die mit Gaserzeugungsmittel (9a, 9b) gefüllt sind, in dem Gehäuse (3) vorgesehen sind, und wobei die Brennkammer (5a, 5b) voneinander getrennt sind.

9. Gaserzeuger für einen Airbag nach Anspruch 8, wobei Betriebsgase, die in mindestens zwei Brennkammern (5a, 5b) erzeugt sind, von einem gemeinsamen Gasaustrittsöffnung (26a, 26b) abgeführt sind.

10. Gaserzeuger für einen Airbag nach Anspruch 8 oder 9, wobei von in den zwei Brennkammern (5a, 5b) erzeugten Betriebsgasen das als erstes erzeugte Betriebsgas die Art der Gasaustrittsöffnung (26a) erreicht, die unter mindestens zwei Gasaustrittsöffnungen (26a, 26b) bei dem niedrigsten Druck zu öffnen ist.

11. Airbag-Vorrichtung umfassend:
einen Gaserzeuger (200) für einen Airbag;
einen Aufprallsensor (201), welcher den Aufprall zur Bestätigung des Gaserzeugers (200) erkennt;
einen Airbag (204), welcher ein Gas zum Aufblasen einführt, welches in dem Gaserzeuger (200) erzeugt ist; und
ein Modulgehäuse (203), welches den Airbag (204) aufnimmt, wobei der Gaserzeuger (200) für einen Airbag der Gaserzeuger für einen Airbag nach einem der Ansprüche 1 bis 10 ist.

## Revendications

1. Générateur de gaz pour un coussin gonflable comprenant, dans un boîtier (3 ; 103) comportant une pluralité d'orifices d'évacuation de gaz (26a, 26b ; 126a, 126b),
un moyen d'allumage (12a, 12b ; 112) à actionner lors de la réception d'un signal d'activation, et un agent de génération de gaz (9a, 9b, 109) devant être allumé et brûlé suite à l'actionnement du moyen d'allumage (12a, 12b, 112) afin de générer un gaz de fonctionnement, et
les orifices d'évacuation de gaz (26a, 26b ; 126a, 126b) fermés par un moyen de fermeture (27 ; 127) qui est rompu à cause de la pression interne du boîtier (3 ; 103) afin d'ouvrir les orifices d'évacuation de gaz (26a, 26b ; 126a, 126b), dans lequel
au moins deux sortes d'orifices d'évacuation de gaz (26a, 26b ; 126a, 126b) à ouvrir à des pressions différentes sont formées dans le boîtier (3 ; 103),
parmi au moins deux sortes d'orifices d'évacuation de gaz (26a, 26b ;
126a, 126b), la sorte d'orifices d'évacuation de gaz (26a ; 126a) à ouvrir à la pression la plus basse est conçue pour être soit l'orifice d'évacuation de gaz (26a; 126a) le plus proche du moyen d'allumage (12a, 12b; 112), soit l'orifice d'évacuation de gaz (26a ; 126a) le plus proche d'un trou de transfert de flamme (17 ; 110) ménagé dans une cloison de séparation (4 ; 104) qui délimite un espace (8 ; 108) contenant le moyen d'allumage (12a, 12b ; 112) et un espace (5a ; 105) contenant un agent de génération de gaz, soit l'orifice d'évacuation de gaz (26a ; 126a) le plus proche du centre de la hauteur axiale du boîtier (3 ; 103) ;
une pluralité orifices d'évacuation de gaz (26a, 26b ; 126a, 126b) de la même sorte est disposée dans le sens de la circonférence du boîtier (3 ; 103), et
les orifices d'évacuation de gaz (26a, 26b ; 126a, 126b) de différentes sortes sont disposés dans un sens axial du boîtier (3 ; 103) ;
**caractérisé en ce que**
les orifices d'évacuation de gaz (26a, 26b ; 126a, 126b) de différentes sortes sont disposés de manière décalée les uns par rapport aux autres dans le sens de la circonférence du boîtier (3 ; 103).

2. Générateur de gaz pour un coussin gonflable conformément à la revendication 1, dans lequel une pluralité de moyens d'allumage (12a, 12b) est prévue, et la sorte d'orifices d'évacuation de gaz (26a) à ouvrir à la pression la plus basse est l'orifice d'évacuation de gaz (26a) le plus proche du moyen d'allumage à actionner au moment le plus précoce parmi une pluralité des moyens d'allumage (12a, 12b).

3. Générateur de gaz pour un coussin gonflable conformément à la revendication 1, dans lequel la sorte d'orifices d'évacuation de gaz (26a ; 126a) à ouvrir à la pression la plus basse est l'orifice d'évacuation de gaz (26a ; 126a) le plus proche du trou de transfert de flamme (17 ; 110) ménagé dans la cloison de séparation (4; 104) qui délimite l'espace (8 ; 108) contenant le moyen d'allumage (12a, 12b; 112) et l'espace (5a; 105) contenant un agent de génération de gaz, et dans lequel une pluralité des moyens d'allumage (12a, 12b) est prévue, et la cloison de séparation (4) sépare, parmi une pluralité de moyens d'allumage (12a, 12b), le moyen d'allumage à actionner au moment le plus précoce de l'agent de génération de gaz (9a).

4. Générateur de gaz pour un coussin gonflable conformément à l'une quelconque des revendications 1 à 3, dans lequel au moins deux sortes d'orifices d'évacuation de gaz (26a, 26b ; 126a, 126b) sont différentes l'une de l'autre en termes d'aire d'ouverture de l'orifice d'évacuation de gaz (26a, 26b ; 126a, 126b) et/ou de la pression de rupture du moyen de fermeture (27 ; 127).

5. Générateur de gaz pour un coussin gonflable conformément à l'une quelconque des revendications 1 à 4, dans lequel au moins deux sortes d'orifices d'évacuation de gaz (26a, 26b; 126a, 126b) sont disposées de manière à être alignées sur la même circonférence pour chaque sorte.

6. Générateur de gaz pour un coussin gonflable conformément à l'une quelconque des revendications 1 à 5, dans lequel l'agent de génération de gaz (9a, 9b ; 109) est admis dans la chambre de combustion (5a, 5b ; 105) prévue dans le boîtier (3 ; 103), le moyen d'allumage (12a, 12b ; 112) est un allumeur de type à allumage électrique, et l'allumeur est disposé dans la chambre de combustion (5b).

7. Générateur de gaz pour un coussin gonflable conformément à l'une quelconque des revendications 1 à 6, dans lequel un élément cylindrique interne (104) est disposé dans le boîtier (103), une chambre contenant un moyen d'allumage (108) stockant le moyen d'allumage (112) est délimitée à l'intérieur de l'élément cylindrique interne (104), et la chambre de combustion (105) remplie de l'agent de génération de gaz (109) est délimitée radialement à l'extérieur de l'élément cylindrique interne (104).

8. Générateur de gaz pour un coussin gonflable conformément à l'une quelconque des revendications 1 à 7, dans lequel au moins deux chambres de combustion (5a, 5b) remplies de l'agent de génération de gaz (9a, 9b) sont prévues dans le boîtier (3), et les chambres de combustion (5a, 5b) sont séparées l'une de l'autre.

9. Générateur de gaz pour un coussin gonflable conformément à la revendication 8, dans lequel des gaz de fonctionnement générés dans au moins deux chambres de combustion (5a, 5b) sont évacués par un orifice d'évacuation de gaz (26a, 26b) commun.

10. Générateur de gaz pour un coussin gonflable conformément à la revendication 8 ou 9, dans lequel, parmi les gaz de fonctionnement générés dans les deux chambres de combustion (5a, 5b) communes, le gaz de fonctionnement généré en premier atteint la sorte d'orifice d'évacuation de gaz (26a) devant être ouvert à la pression la plus basse parmi au moins deux orifices d'évacuation de gaz (26a, 26b).

11. Appareil de coussin gonflable comprenant :
un générateur de gaz (200) pour un coussin gonflable ;
un détecteur d'impact (201) détectant l'impact afin d'actionner le générateur de gaz (200) ;
un coussin gonflable (204) introduisant un gaz généré (200) dans le générateur de gaz pour le gonflage ; et
un boîtier de module (203) contenant le coussin gonflable (204), le générateur de gaz (200) pour un coussin gonflable étant le générateur de gaz pour un coussin conformément à l'une quelconque des revendications 1 à 10.
